(19) Europäisches Patentamt
European Patent Office
Office européen des brevets

(11) EP 4 424 407 A1

(12) EUROPEAN PATENT APPLICATION

(43) Date of publication:
04.09.2024 Bulletin 2024/36

(51) International Patent Classification (IPC):
B01D 53/94 (2006.01)

(21) Application number: 23158937.5

(22) Date of filing: 28.02.2023

(52) Cooperative Patent Classification (CPC):
B01D 53/9454; B01D 53/945; B01D 2255/1021;
B01D 2255/1023; B01D 2255/1025;
B01D 2255/407; B01D 2255/903; B01D 2255/908;
B01D 2255/9155; B01D 2255/9207; B01D 2258/014

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Umicore AG & Co. KG
63457 Hanau-Wolfgang (DE)

(72) Inventors:
• BRAUN, Carolin
  63225 Langen (DE)
• BRADE, Ronja
  63165 Mühlheim am Main (DE)
• GOTTHARDT, Meike Antonia
  60389 Frankfurt (DE)
• SCHOENHABER, Jan
  64287 Darmstadt (DE)

(54) **GPF WITH IMPROVED WASHCOAT DISTRIBUTION**

(57) The present invention is directed to a wall-flow filter having a catalytically active coating Z and an end zone W, the latter being substantially free of any washcoat. In addition a process for the production and the use of the inventive wall-flow filter is addressed.

Fig. 1

EP 4 424 407 A1

**Description**

The present invention is directed to a wall-flow filter having a catalytically active coating Z and an end zone W, the latter being substantially free of any washcoat. In addition a process for the production and the use of the inventive wall-flow filter is addressed.

The exhaust gas of internal combustion engines in motor vehicles typically contains the harmful gases carbon monoxide (CO), hydrocarbons (HC), nitrogen oxides (NOx), and possibly sulfur oxides (SOx), as well as particulates that mostly consist of solid carbon-containing particles and possibly adherent organic agglomerates. These are called primary emissions. CO, HC, and particulates are the products of the incomplete combustion of the fuel inside the combustion chamber of the engine. Nitrogen oxides form in the cylinder from nitrogen and oxygen in the intake air when combustion temperatures exceed 1200°C. Sulfur oxides result from the combustion of organic sulfur compounds, small amounts of which are always present in non-synthetic fuels. Compliance with statutory exhaust emission limits for motor vehicles applicable in Europe, China, North America, and India requires the extensive removal of said substances, which are harmful to health and environment, from the exhaust gas.

A variety of catalytic technologies for the purification of exhaust gases have been developed, the fundamental principle of which is usually based upon guiding the exhaust gas that needs purification over a flow-through or wall-flow honeycomb body with a catalytically active coating applied thereto. The catalytic converter facilitates the chemical reaction of different exhaust gas components, while forming non-hazardous products, such as carbon dioxide, water, and nitrogen.

The flow-through or wall-flow honeycomb bodies just described are also called catalyst supports, carriers, substrates or monoliths, as they carry the catalytically active coating on their surface or in the walls forming this surface. The catalytically active coating is often applied to the catalyst support in the form of a suspension in a so-called coating operation. Many such processes have been published in the past by automotive exhaust-gas catalytic converter manufacturers (EP1064094B1, EP2521618B1, WO10015573A2, EP1136462B1, US6478874B1, US4609563A, WO9947260A1, JP5378659B2, EP2415522A1, JP2014205108A2).

The operating mode of the internal combustion engine is decisive for the respectively possible methods of harmful substance conversion in the catalytic converter in each case. Diesel engines are usually operated with excess air, most spark-ignition engines with a stoichiometric mixture of intake air and fuel. Stoichiometrically means that on average exactly as much air is available for combustion of the fuel present in the cylinder as is required for complete combustion. The combustion air ratio $\lambda$ (A/F ratio; air/fuel ratio) sets the air mass $m_{L,actual}$, which is actually available for combustion in relation to the stoichiometric air mass $m_{L,st}$:

$$\lambda = \frac{m_{L,actual}}{m_{L,st}}$$

If $\lambda$ < 1 (e.g., 0.9), this means "air deficiency" and one speaks of a rich exhaust gas mixture; $\lambda$ > 1 (e.g., 1.1) means "excess air" and the exhaust gas mixture is referred to as lean. The statement $\lambda$ = 1.1 means that 10% more air is present than would be required for the stoichiometric reaction.

When lean-burn motor vehicle engines are mentioned in the present text, reference is thereby made mainly to diesel engines and to predominantly on average lean-burn spark-ignition engines. The latter are gasoline engines predominantly operating on average with a lean A/F ratio (air/fuel ratio). In contrast, most gasoline engines are operated with an on-average stoichiometric combustion mixture. In this respect, the expression "on-average" takes into consideration the fact that modern gasoline engines are not statically operated with a fixed air/fuel ratio (A/F ratio; $\lambda$ value). It is rather the case that a mixture with a discontinuous course of the air ratio $\lambda$ around $\lambda$ = 1.0 is predetermined by the engine control system, resulting in a periodic change of oxidizing and reducing exhaust gas conditions. This change in the air ratio $\lambda$ is significant for the exhaust gas purification result. To this end, the $\lambda$ value of the exhaust gas is regulated with a very short cycle time (approx. 0.5 to 5 Hz) and an amplitude $\Delta\lambda$ of $0.005 \leq \Delta\lambda \leq 0.07$ around the value $\lambda$ = 1.0. On-average, the exhaust gas under such operating states should therefore be described as "on-average" stoichiometric. In order for these deviations to not have a negative effect on the result of exhaust gas purification when the exhaust gas flows over a three-way catalytic converter, oxygen-storing materials or components contained in the three-way catalytic converter balance out these deviations by absorbing oxygen from the exhaust gas or releasing it into the exhaust gas as needed (Catalytic Air Pollution Control, Commercial Technology, R. Heck et al., 1995, p. 90). However, due to the dynamic mode of operation of the engine in the vehicle, further deviations from this state also occur at times. For example, under extreme acceleration or while coasting, the operating states of the engine, and thus of the exhaust gas, can be adjusted and can, during these states on-average, be hypostoichiometric or hyperstoichiometric. Nevertheless, these engines run predominantly (during the majority of operation time) on an on-average stoichiometric A/F-ratio. Lean-burn spark-ignition engines have an exhaust gas which is predominantly, i.e., for the majority of the duration of the combustion operation, combusted with an air/fuel ratio that is lean "on-average". The same applies for diesel engines.

The harmful gases carbon monoxide and hydrocarbons from a lean exhaust gas can easily be rendered harmless by oxidation on a suitable oxidation catalyst. In a stoichiometrically operated internal combustion engine, like in gasoline engines, all three harmful gases (HC, CO, and NOx) can be eliminated via a three-way catalytic converter.

As already said, in addition to gaseous pollutants, the exhaust gas from combustion engines also contains extremely fine particles (PM) resulting from the incomplete combustion of the fuel which essentially consist of soot. In contrast to the particle emission of diesel engines, the particles in the exhaust gas of stoichiometrically operated combustion engines, such as gasoline engines, are very small and have an average particle size of less than 1 $\mu$m. Typical particle sizes range from 10 to 200 nm. Furthermore, the amount of particles emitted is very low and ranges from 2 to 4 mg/km. The European exhaust emission standard EU-6c is associated with a conversion of the limit value for such particles from the particle mass limit value to a more critical particle number limit value of $6 \times 10^{11}$/km (in the Worldwide Harmonized Light Vehicles Test Cycle - WLTP) and Euro-6d prescribes this limit also under real drive conditions. Euro 7 will be even more stringent regarding these limits. This creates a need for exhaust gas cleaning concepts also for stoichiometrically operated combustion engines, which include effectively operating equipment for removing particles.

Wall-flow filters made of ceramic materials, such as silicon carbide, aluminum titanate and cordierite, have proven themselves in the field of cleaning exhaust gases from lean-burn engines, i.e. in particular diesel engines. Gasoline particulate filters with and without additional catalytically active coating are suitable aggregates for removing the particulate emissions from gasoline engines. In order to meet the legal standards, it is desirable for current and future applications to combine particulate filters with other catalytically active functionalities not only for reasons of cost but also for installation space reasons.

These wall-flow filters are made up of a large number of parallel channels formed by porous walls. The channels are alternately closed at one of the two ends of the filter so that channels E, which are open at the first end of the filter and closed at the second end of the filter, and channels A, which are closed at the first end of the filter and open at the second end of the filter, are formed. For example, exhaust gas flowing into channels E can only leave the filter via channels A, and must flow through the porous walls between channels E and A for this purpose. When the exhaust gas passes through the wall, the particles are retained and the exhaust gas is cleaned. The particles retained in this manner must then be burnt off or oxidized in order to prevent a clogging of the filter or an unacceptable increase in the back pressure of the exhaust system.

Catalytic coatings can be applied to the porous walls between the channels (so-called "on-wall coating") or introduced into the porous walls (so-called "in-wall coating"). EP1657410A2 already describes a combination of both coating types; that is, part of the catalytically active material is present in the porous walls and another part is present on the porous walls.

The concept of removing particles out of the exhaust gas using wall-flow filters has already been applied to the cleaning of exhaust gas out of combustion engines operated with stoichiometric air/fuel mixtures; see, for example, EP2042226A2. According to its teaching, a wall-flow filter comprises two layers arranged one above the other, wherein one can be arranged in the porous wall and the other can be arranged on the porous wall. DE102011050788A1 pursues a similar concept. Here, the porous filter walls contain a catalyst material of a three-way catalytic converter, while in addition a catalyst material of a three-way catalytic converter is applied to partial regions of the filter walls.

The use of a particulate filter, whether catalytically coated or not, leads to a noticeable increase in the exhaust gas back-pressure in comparison with a flow-through substrate of the same dimensions and thus to a reduction in the torque of the engine or possibly to increased fuel consumption. In order to not increase the exhaust gas back-pressure even further, the amounts of material (catalytically active material and support material) are generally applied in smaller quantities in the case of a filter than in the case of a flow-through substrate. As a result, the catalytic effectiveness of a catalytically coated particulate filter is frequently inferior to that of a flow-through substrate of the same dimensions.

There have already been some efforts to provide particulate filters which have good catalytic activity due to an active coating and yet have the lowest possible exhaust-gas back-pressure. On the one hand, it has proven to be advantageous regarding back-pressure, if the catalytically active coating is not present as a layer on the wall of a porous wall-flow filter, but instead the wall of the filter is to be interspersed with the catalytically active material (see for example WO2005016497A1, JPH01-151706 and EP1789190B1). For this purpose, the particle size of the catalytic coating is selected such that the particles penetrate into the pores of the wall-flow filters and can be fixed there by calcination.

There is still a need for catalytically active particulate filters that combine the functionalities of a particulate filter and a catalytic converter and at the same time allow for adhering to the emission limits that will apply in the future. In particular, the achievement of a good catalytic activity and a back-pressure increase as low as possible should be contemplated.

These objectives are dispensed with by an invention of present independent claim 1, 9 and 11. Claims dependent from these independent claims are directed towards preferred embodiments of the present invention.

In that one provides a wall-flow filter for removing particles from the exhaust gas of an internal combustion engine, which comprises a wall-flow filter substrate of length L and catalytic coating Z,

wherein the wall-flow filter substrate has channels E and A extending in parallel between a first end (I) and a second end (II) of the wall-flow filter substrate, which are separated by porous walls and form surfaces $O_E$ and $O_A$, and wherein the channels E are closed at the second end (II) and the channels A are closed at the first end (I), and

wherein the wall-flow filter has a zone W that is substantially free of any washcoat and extends from the second end (II) of the wall-flow filter over at most 20% of the length L of the wall-flow filter on the surfaces $O_A$, and coating Z is located in the channels A on the surfaces $O_A$ and extends from the end of zone W over at least 35% of the length L of the wall-flow filter and comprises at least one PGM supported by one or more carrier materials and one or more oxygen storage components, the problems associated with catalytic activity and increase in back-pressure are minimized.

According to this invention the zone W preferably includes the second end (II) surface of the filter that is substantially free of any washcoat as well. Substantially free of any washcoat in this invention is defined in a way that the mass of washcoat in zone Z compared to the mass of washcoat in zone W is more than 95:5, preferably more than 96:4, more preferably more than 97:3, very preferably more than 98:2. Surprisingly, the fact that an area in the channels A of the wall-flow filter near the plugs, and preferably the surface of the filter at the second end (II), remains substantially uncoated (zone W) tremendously reduces the increase in back-pressure when establishing a coating of the wall-flow filter on the surfaces $O_A$.

The skilled worker knows what a catalytic coating is and how to manufacture it. The term "coating" is to be understood to mean the application of catalytically active materials to - in this case - a wall-flow filter. The coating assumes the actual catalytic function. In the present case, generally catalytic coatings are carried out by applying a correspondingly low-viscosity aqueous suspension of the catalytically active components, also referred to as a washcoat or slurry, into or onto the channel walls of the wall-flow filter, e.g. in a manner described in the introduction. The term "onto" refers to an on-wall coating which has less than 20 wt.-%, better less than 10 wt.-% of the coating amount within the pores of the porous filter walls. The term "into" on the other hand refers to a coating which resides to more than 80 wt.-%, better more than 90 wt.-% of the coating amount within the porous structure of the filter wall. There are ways to measure these values known to those skilled in the art (e.g. by computationally analyzing SEM pictures of cut substrates). After application of the suspension, the wall-flow filter is normally dried and/or calcined at an increased temperature if deemed necessary by the skilled worker.

The catalytic coating Z can be applied to the wall-flow filter over its total coatable length L or at least over a part of it. That is to say, in this case the length of this catalytic coating Z can be at least 35% of the length L, more preferably at least 50% and most preferably at least 70%, beginning at the end of zone W and being coated onto the surfaces $O_A$.

All ceramic materials customary in the prior art can be used as wall-flow monoliths or wall-flow filters. Porous wall-flow filter substrates made of cordierite, silicon carbide, or aluminum titanate are preferably used. As already mentioned, these wall-flow filter substrates have inlet and outlet channels, wherein the respective downstream ends of the inlet channels and the upstream ends of the outlet channels are offset against each other and closed-off with gas-tight "plugs." In this case, the exhaust gas that is to be purified and that flows through the filter substrate is forced to pass through the porous wall between the inlet channel and outlet channel, which delivers an excellent particulate filtering effect. The filtration property for particulates can be designed by means of porosity, pore/radii distribution, and thickness of the wall. The porosity of the uncoated wall-flow filters is typically more than 40%, generally from 40% to 75%, particularly from 50% to 70% [as measured according to DIN 66133, latest version on the date of application]. The average pore size of the uncoated filters is at least 7 $\mu$m, for example from 7 $\mu$m to 34 $\mu$m, preferably more than 10 $\mu$m, in particular more preferably from 10 $\mu$m to 25 $\mu$m, or very preferably from 13 $\mu$m to 20 $\mu$m [measured according to DIN 66134, latest version on the date of application].

The catalytic coating Z of the invention preferably has a loading of 20 g/l to 200 g/l, preferably 30 g/l to 150 g/l. The most suitable amount of loading of a filter coated onto the wall depends on its cell density, its wall thickness, and the porosity. In the case of common medium-porous filters (<60% porosity) with, for example, 200 cpsi cell density and 8 mil wall thickness, the preferred loading is 20 g/l to 80 g/l (based on the outer volume of the filter substrate). Highly porous filters (>60% porosity) with, for example, 300 cpsi and 8 mil have a preferred load of 25 g/l to 150 g/l, particularly preferably 30 g/l to 100 g/l, better 50 g/l to 80 g/l (based on the outer volume of the filter substrate). The internal porous walls of the particulate filter according to the invention are preferably free of further catalytically active coatings.

The catalytic coating Z is three-way catalytically active, especially at operating temperatures of 250 to 1100°C. It comprises one or more PGMs supported or fixed to one or more carrier materials and one or more oxygen storage components. Platinum, palladium and rhodium are particularly suitable as PGMs, wherein palladium, rhodium or palladium and rhodium or platinum and rhodium or platinum, palladium and rhodium are preferred and palladium and rhodium are particularly preferred. The PGMs are usually used in quantities of 0.10 to 10 g/l, preferably 0.15 to 5 g/l based on the volume of the wall-flow filter in coating Z.

Based on the particulate filter according to the invention, the proportion of rhodium in the PGM content of coating Z is in particular greater than or equal to 10% by weight.

As carrier materials for the PGMs, all materials familiar to the person skilled in the art for this purpose can be considered. Such materials are in particular metal oxides with a BET surface area of 30 to 250 m$^2$/g, preferably 100 to 200 m$^2$/g (determined according to DIN 66132). Particularly suitable carrier materials for the PGMs are selected from the series consisting of aluminum oxide, doped aluminum oxide, silicon oxide, titanium dioxide and mixed oxides of one or more of these. Doped aluminum oxides are, for example, aluminum oxides doped with lanthanum oxide, zirconium oxide and/or titanium oxide. Lanthanum-stabilized aluminum oxide is advantageously used, wherein lanthanum is used in quantities of 1 to 10% by weight, preferably 3 to 6% by weight, in each case calculated as La$_2$O$_3$ and based on the weight of the stabilized aluminum oxide. Another suitable carrier material is lanthanum-stabilized aluminum oxide the surface of which is coated with lanthanum oxide, with barium oxide or with strontium oxide. In a preferred embodiment, the one or more carrier materials in coating Z are present in an amount of 20 to 50%, more preferred 35 to 45% by weight based on the total weight of the coating.

Oxygen storage components are known to the skilled worker. Oxygen storage components can absorb oxygen under lean exhaust conditions and can provide oxygen to the exhaust gas under rich exhaust conditions as mentioned earlier. It is preferred when coating Z in the wall-flow filter according to the invention comprises the one or more oxygen storage components in a total amount of 40 to 80%, more preferred of 45 to 70% by weight based on the total weight of the coating Z. The presence or absence of oxygen storing components can hereby be determined by means of the leap test. The oxygen storage capacity of a catalytic converter or system positioned between two lambda sensors can thereby be calculated by means of the time delay of the two sensor signals occurring at air/fuel ratio leaps (Autoabgaskalalysatoren, Grundlagen-Herstellung-Entwicklung-Recycling-Okologie, Christian Hagelüken, 2nd edition, 2005, p 62). Oxygen storage components are preferably cerium/zirconium/rare earth metal mixed oxides, which are particularly suitable in this respect. The term "cerium/zirconium/rare earth metal mixed oxide" within the meaning of the present invention excludes physical mixtures of cerium oxide, zirconium oxide and rare earth oxide. Rather, "cerium/zirconium/rare earth metal mixed oxides" are characterized by a largely homogeneous, three-dimensional crystal structure that is ideally free of phases of pure cerium oxide, zirconium oxide or rare earth oxide. Depending on the manufacturing process, however, not completely homogeneous products may arise which can generally be used without any disadvantage. In all other respects, the term "rare earth metal" or "rare earth metal oxide" within the meaning of the present invention does not include cerium or cerium oxide.

Lanthanum oxide, yttrium oxide, praseodymium oxide, neodymium oxide and/or samarium oxide can, for example, be considered as rare earth metal oxides in the cerium/zirconium/rare earth metal mixed oxides. Lanthanum oxide, yttrium oxide and/or praseodymium oxide are preferred. Lanthanum oxide and/or yttrium oxide are particularly preferred, and lanthanum oxide and yttrium oxide, yttrium oxide and praseodymium oxide, and lanthanum oxide and praseodymium oxide are more particularly preferred. In embodiments of the present invention, the oxygen storage components are particularly preferably free from neodymium oxide. The coating Z usually contains oxygen storage components in quantities from 10 to 120 g/l, better 20 to 100 g/l based on the volume of the wall-flow filter.

In accordance with the invention, the cerium oxide to zirconium oxide mass ratio in the cerium/zirconium/rare earth metal mixed oxides can vary within wide limits. It is, for example, 0.1 to 1.5, preferably 0.2 to 1 or 0.3 to 0.5. If the cerium/zirconium/rare earth metal mixed oxides contain yttrium oxide as a rare earth metal, the proportion thereof in the mixed oxide is, in particular, 2 to 15 wt%, and preferably 3 to 10 wt%. If the cerium/zirconium/rare earth metal mixed oxides contain praseodymium oxide as a rare earth metal, the proportion thereof is, in particular, 2 to 15 wt%, and preferably 3 to 10 wt%. If the cerium/zirconium/rare earth metal mixed oxides contain lanthanum oxide and yttrium oxide as rare earth metal, the mass ratio thereof is, in particular, between 0.1 to 1, and preferably 0. 3 to 1. If the cerium/zirconium/rare earth metal mixed oxides contain lanthanum oxide and praseodymium oxide as a rare earth metal, the mass ratio thereof is, in particular, 0.1 to 1, and preferably 0. 3 to 1.

In embodiments of the present invention, coating Z comprises an oxygen storage component having a cerium oxide content of 15 to 60%, better 20 to 55% by weight based on the weight of the oxygen storage component. In particular, lanthanum oxide-containing oxygen storage components have a lanthanum oxide to cerium oxide mass ratio of 0.05 to 0.5.

In embodiments of the present invention, coating Z contain an alkaline earth compound, such as strontium oxide, barium oxide or barium sulfate. The amount of alkaline earth compounds per coating is, in particular, 2 to 20 g/l volume of the wall-flow filter. Coating Z contains, in particular, strontium oxide or barium oxide. The mass ratio of carrier materials and oxygen storage components in the coating Z is usually 0.3 to 1.5, better 0.4 to 1.3.

In further embodiments of the present invention, one or both of the coating Z contain additives, such as rare earth compounds, e.g., lanthanum oxide, and/or binders, e.g., aluminum compounds. Such additives are used in quantities that may vary within wide limits and that the person skilled in the art can determine by simple means in the specific case. They may help improve the rheology and adhesion of the coating.

In embodiments of the present invention, the coating Z comprise lanthanum-stabilized aluminum oxide, platinum, palladium, rhodium or palladium and rhodium or platinum and rhodium or platinum, palladium and rhodium and an oxygen storage component comprising zirconium oxide, cerium oxide, lanthanum oxide, and yttrium oxide and/or praseodymium oxide and/or neodymium oxide.

In other embodiments of the present invention, the coating Z comprises an additional second oxygen storage component different from the first oxygen storage component which contains zirconium oxide, cerium oxide, lanthanum oxide, and praseodymium oxide and/or yttrium oxide and/or neodymium oxide. The difference can be attributed to the amount of and/or type of ingredients present in the oxygen storage components. In a preferred embodiment coating Z comprise lanthanum-stabilized aluminum oxide, rhodium, palladium, or palladium and rhodium, a first oxygen storage component comprising zirconium oxide, cerium oxide, yttrium oxide, and lanthanum oxide, and a second oxygen storage component comprising zirconium oxide, cerium oxide, lanthanum oxide, and praseodymium oxide. In embodiments of the present invention, the coating Z contain no zeolite and no molecular sieve.

It has been proven advantageous if the wall-flow filter of the invention comprises a coating Z which is flat and has no or only a minor gradient along the length of the filter wall. That is to say, the heights of the coating Z measured at different locations within the filter should be quite identical along the filter length. In a preferred aspect of the present invention the ratio of the thickness of the coating Z 5 mm away from each end in coating Z is between 1.3 - 0.7, better 1.2 - 0.8. The flat profile of this coating serves for lower increase in back-pressure.

However, in another embodiment the coating Z can display an increasing gradient from the first end to the second end of the zone, whereas the first end is defined as the end being closest to the open side of the channel. In a preferred aspect of the present invention the ratio of the thickness of the coating Z 5 mm away from the first end and the second end of coating Z is between 0,1 - 0.7, better 0,2 - 0.6. Again, for certain applications this can lower the back-pressure even more.

However, in another embodiment the coating Z can display an decreasing gradient from the first end to the second end of the zone, whereas the first end is defined as the end being closest to the open side of the channel. In a preferred aspect of the present invention the ratio of the thickness of the coating Z 5 mm away from the first end and the second end of coating Z is between 1,3 - 10, better 1,5 - 8. Again, for certain applications this can lower the back-pressure even more.

In a further aspect the present invention is directed to a favorable process for the production of a wall-flow filter according to the invention comprises the steps of:

i) contacting the second end (II) of the wall-flow filter into a hydrophobizing agent to establish a hydrophobized zone W;

ii) optionally drying the wall-flow filter;

iii) coating the second end (II) of the wall-flow filter with an aqueous coating slurry comprising at least one PGM supported by one or more carrier materials and one or more oxygen storage components to establish coating Z;

iv) optionally drying and calcining the coated wall-flow filter.

In a first step, the wall-flow substrate is contacted at one of its ends with a liquid hydrophobizing agent. This end of the wall-flow filter is then called second end (II). The hydrophobic masking zone W can be applied using a number of approaches. In one approach a wax or viscous oil (such as a fatty acid) can be utilized with a melting point just above room temperature and which has a lower viscosity on melting allowing to push the melted wax into the monolith using e.g. a piston type coater (e.g. WO2011098450A1) and removing excess wax or oil with piston retraction so as to give cleared channels with a residual layer of wax or viscous oil on the washcoat surface. The zone length can be controlled precisely by the length of the piston stroke.

A number of wax types can be utilized such as paraffin wax which can be derived from petroleum, coal or oil shale. Other types of waxes or viscous oils can be synthesized from ethylene polymerization or polymerization of propylene. Waxes or viscous oils typically consist of a range of hydrocarbons ranging in carbon number from 20 to 70 carbon atoms with alkane components predominating. However, they can also contain a range of functional groups such as fatty acids, primary and secondary long chain alcohols, unsaturated bonds, aromatics, amides, ketones and fatty acid esters.

The melting temperature of waxes can be controlled both by the carbon number in the chains or by control of branching, and the presence of the functional groups mentioned above. Typically, a wax is needed that melts just above room temperature, preferably in the range of 30° - 80°C, such as paraffin wax which melts at about 37°C (99°F), and have a boiling/decomposition point preferably between 300° and 400°C. Paraffin wax e.g. decomposes/boils at 370°C. Other waxes or oils include naturally derived products such as coconut oil, cocoa butter or others with the appropriate viscosity and melting temperature.

An alternative approach is to use a wax emulsion of high solids content. This approach eliminates the need to heat the wax or oil to get the appropriate viscosity and fluidity. After application of the emulsion the part can be heated for a short period to melt and spread the wax on the washcoat surface to form a continuous hydrophobic layer over the carrier substrate. Waxes and wax emulsions which can be used in the inventive process are known to the skilled person and are available in the market place.

Next, a drying step can optionally be performed. This is necessary in those cases where the hydrophobizing agent is dissolved in an, e.g. organic solvent with low boiling temperature. To get rid of the solvent and let the hydrophobizing agent establish the hydrophobized zone W a temperature as needed should be established. The temperature is mostly within 30 - 80°C, better 40 - 60°C. However, a solvent may not be needed for all hydrophobizing agents. Some solidify already at room temperature and liquify a little above room temperature. These hydrophobizing agents are particularly preferred. The above temperature range is also a valid range in this regard.

The particulate filter according to the invention can then be coated to establish a coating Z at the side where the hydrophobized zone W is present (second end (II)) according to methods known to the person skilled in the art (see introduction), e.g., by applying a coating suspension, which is usually called a washcoat or slurry, to the wall-flow filter by means of one of the usual dip-coating or pump- and suction-coating methods. Thermal post-treatment or calcination usually follow.

In a preferred process, the step iii) requires to position the wall-flow filter vertically having the second end (II) at the top, supplying the coating slurry onto the second end (II) and sucking and/or pressing the coating slurry into the wall-flow filter. In a very preferred aspect a coating Z of the filter according to the invention is made using a method as depicted in DE202022000455U1. A further preferred mode of coating can be taken from EP2533901A1.

In a further step (iv), the masking zone has to be removed again. This can be done by, for example, dissolving the fatty acids used as hydrophobizing agent in an alkaline medium or by drying and heating such that the hydrophobic masking zone is completely burned off. The temperatures applied are usually between 400 and 600°C. These are the calcining temperatures normally also used for calcining a washcoat after coating. The skilled person knows which temperatures to use. After coating the wall-flow filter with coating Z an optional drying step could be established. The potential burning-off of the hydrophobizing agent and calcination just described is done afterwards.

A next aspect of the present invention is directed towards the use of the inventive wall-flow filter for mitigation of noxious pollutants of combustion engines. While the inventive filter can be used in lean as well as in stoichiometric environment it is preferred to use it for mitigation the noxious exhaust pollutants stemming from gasoline engines, the latter running preferably on average with a stoichiometric air-to-fuel ratio. Hereby, the exhaust gases preferably enter the wall-flow filter through the first end (I) and leave the wall-flow filter through the second end (II).

Normally, due to the stringent emission limits the wall-flow filter is not used alone. Rather it is used in combination with other exhaust treatment catalysts, like SCR catalyst (selective catalytic reduction), LNTs (lean NOx traps), HCT (hydrocarbon traps), ASC (ammonia storage catalysts), TWC (three-way catalyst), which are known to the skilled worker. Most preferred is a use, wherein the exhaust gas is routed over a first TWC before it enters the wall-flow filter and afterwards over a second TWC.

In one embodiment, the inventive filter is present in an exhaust system comprising at least one further three-way-catalyst (TWC) positioned on a separate flow-through substrate. In a more preferred system the TWC is located in a close-coupled position in the exhaust train, approximately 20 - 60 cm, more preferred 30 - 50 cm downstream of the engine outlet. Further preferred, the wall-flow filter having the inventive coating Z reside in the underfloor position of the vehicle. Alternatively, the wall-flow filter having the inventive coating Z reside downstream of the close-coupled TWC in a close-coupled position in the vehicle, preferably the wall-flow filter having the coating Z is positioned within one canning with the close-coupled TWC.

In a second embodiment, the inventive filter is present in an exhaust system comprising at least 2 further three-way-catalysts (TWC) each of them positioned on a separate flow-through substrate. In a more preferred system at least one of the TWCs is located in a close-coupled position in the exhaust train, approximately 20 - 60 cm, more preferred 30 - 50 cm downstream of the engine outlet. Further preferred, the wall-flow filter having the inventive coating Z reside downstream of the close-coupled TWC in a close-coupled position of the vehicle followed downstream by a second TWC that is located in underfloor position of the vehicle. Most preferred, the wall-flow filter having the coating Z is positioned within one canning with the upstream close-coupled TWC.

In a third embodiment, the inventive filter is present in an exhaust system comprising at least 2 further three-way-catalysts (TWC) each of them positioned on a separate flow-through substrate. In a more preferred system at least one of the TWCs is located in a close-coupled position in the exhaust train, approximately 20 - 60 cm, more preferred 30 - 50 cm downstream of the engine outlet. Further preferred, the wall-flow filter having the inventive coating Z reside in the underfloor position of the vehicle followed downstream by a second TWC. Most preferred the wall-flow filter having the coating Z is positioned within one canning with the downstream TWC.

TWCs have a catalytic coating which eliminate nitrogen oxides and hydrocarbons and carbon monoxide (HC, CO, and $NO_x$) in the stoichiometric exhaust gas ($\lambda$ = 1 conditions). They are usually referred to as TWCs. In addition, they can convert the oxides of the nitrogen under rich exhaust gas conditions and CO and HC under lean conditions. They for the most part include platinum group metals, such as Pt, Pd, and Rh, as catalytically active components, wherein Pd and Rh are particularly preferred. The catalytically active metals are often deposited with high dispersion on large-surface oxides of aluminum, zirconium, and titanium, or mixtures thereof, which may be stabilized by additional transition elements, such as lanthanum, yttrium, praseodymium, etc. Three-way catalysts also include oxygen-storing materials (for example, Ce/Zr mixed oxides; see below). For example, a suitable three-way catalytic coating and corresponding catalysts are described in EP1181970B1, EP1541220B1, WO2008113445A1, WO2008000449A2, WO2019121995A1 WO 2019121994A1 which are referenced here.

The catalytically active TWCs are each located on the walls in the channels of separate through-flow substrates. Ceramic honeycomb bodies that can be used according to the present invention are known through-flow substrates and obtainable on the market. They consist, for example, of silicon carbide, aluminum titanate or cordierite and, for example, have a cell density of 200 to 900 cells per square inch (cpsi) and usually a wall thickness of between 2 and 12 mil, or 0.051 and 0.305 mm.

Oxygen-storing materials have redox properties and can react with oxidizing components, such as oxygen or nitrogen oxides in an oxidizing atmosphere, or with reducing components, such as hydrogen or carbon monoxide, in a reducing atmosphere. The embodiment of the exhaust gas aftertreatment of an internal combustion engine operating essentially in the stoichiometric range is described in e.g. EP1911506A1. Advantageously, an oxygen-storing material consists of a cerium/zirconium mixed oxide. Further oxides, in particular oxides of rare earth metals, may be present. Preferred embodiments according to the invention thus additionally include lanthanum oxide, yttrium oxide, or neodymium oxide. In this regard, reference is also made to the disclosure of US6605264BB and US6468941BA. Other such storage materials and three-way catalysts are described in WO05113126A1, US6387338BA, US7041622BB, EP2042225A1, for example. The TWC-coating usually contains oxygen storage components in amounts of 30 to 225 g/l, based on the volume of the honeycomb body, preferably 40 to 200 g/l and particularly preferably 50 to 160 g/l.

Within the TWCs various catalytic functions may also be combined with one another. The three-way catalysts mentioned above may, for example, be equipped with a nitrogen oxide storage functionality (TWNSC). As stated above, these catalysts consist of materials that, under stoichiometric exhaust gas conditions, impart to the catalyst the function of a three-way catalyst, and that have a function for the storage of nitrogen oxides under lean exhaust-gas conditions. These stored nitrogen oxides are regenerated during brief rich operating phases in order to restore storage capability. The manufacturing of a corresponding TWNSC preferably takes place via the assembly of materials that are used for the construction of a three-way catalyst and a nitrogen oxide storage catalyst. The two functions of the TWNSC that are described here may thereby be present on a carrier, blended with or separate from one another in different layers or zones. A particularly preferred embodiment of such a catalyst is described in WO2010097146A1 or WO2015143191 A1, for example.

The precious metals within the TWCs are usually used in amounts of 0.1 g/l to 15 g/l, based on the volume of the ceramic honeycomb body, preferably 0.15 g/l to 10 g/l. In a preferred embodiment, the precious metals are present in equal measure both on the aluminum oxide and on the oxygen storage components. All materials familiar to the person skilled in the art for this purpose may be used as support materials for the precious metals. Such materials are in particular metal oxides with a BET surface area of 30 to 250 m²/g, preferably 100 to 200 m²/g (determined according to DIN 66132 - latest version as of filing date). Particularly suitable support materials for the precious metals are selected from the series consisting of aluminum oxide, doped aluminum oxide, silicon oxide, titanium dioxide and mixed oxides of one or more of these. Doped aluminum oxides are, for example, aluminum oxides doped with lanthanum oxide, barium oxide, zirconium oxide and/or titanium oxide. Lanthanum-stabilized aluminum oxide is advantageously used, wherein lanthanum is used in quantities of 1 to 10% by weight, preferably 3 to 6% by weight, in each case calculated as $La_2O_3$ and based on the weight of the stabilized aluminum oxide. The total loading of the TWC-substrate with the catalytic coating is 40 g/l to 300 g/l, based on the volume of the support, preferably 50 g/l to 260 g/l and particularly preferably 60 g/l to 220 g/l.

In a further preferred aspect, the wall-flow filter of the invention can comprise a further coating Y either within the pores of the channel walls ("into") or onto the inlet. The coating Y is three-way catalytically active - especially at operating temperatures of 250 to 1100 °C. It usually contains one or more PGMs fixed or supported on one or more carrier materials, and one or more oxygen storage components. The coatings Y and Z can comprise the same oxygen storage components and the same carrier materials for PGMs in different, but preferably equal, quantities. The coatings Y and Z also contain the same or different PGMs in the same or different quantities. The coatings Y and Z are particularly preferably completely the same. On the other hand, coatings Y and Z may differ in the components they contain. For example, they may differ in terms of the PGMs they contain or the oxygen storage components they contain. However, they may also contain identical components, but such components should then advantageously be present in different quantities. In embodiments of the present invention, the sum of the lengths of coating Y and coating Z is 110 to 160% of the length L - preferably, 115 to 140% of the length L. In embodiments of the present invention, the coating Y contain no zeolite and no molecular sieve. The limits of ingredients already presented for coating Z can mutatis mutandis be applied to the coating Y

Surprisingly, it has been found that it is advantageous to distribute the catalytic coating Z onto surface area $O_A$ of the porous filter wall in the channels A in such a way as to leave a few mm at the second end (II) uncoated (zone W). According to the experiments made, this serves for a reasonable catalytic activity combined with a lower increase in back-pressure behaviour. In addition to this, a flat profile of the coating Z further intensifies the reduction in back-pressure compared to wall-flow filters rather coated in a style of the prior art. This was not to be expected, based upon the known prior art.

Figures:

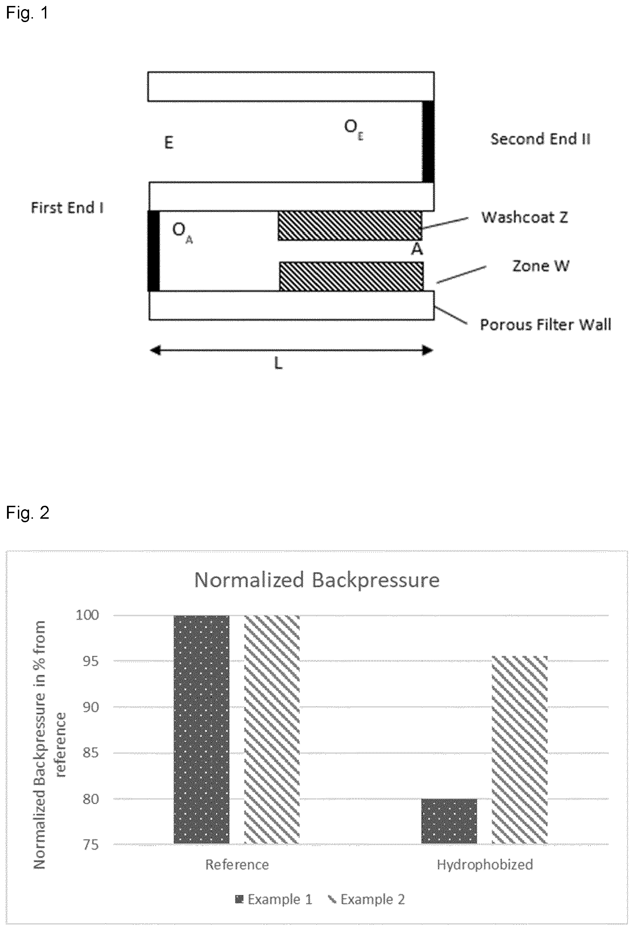

Figure 1 shows a particulate filter according to the invention which comprises a wall-flow filter of length L having channels E and channels A that extend in parallel between a first end (I) and a second end (II) of the wall-flow filter and are separated by porous walls, which form surfaces $O_E$ or $O_A$, respectively, and wherein the channels E are closed at the second end (II) and the channels A are closed at the first end (I). Coating Z is located in the channels A on the surfaces $O_A$. In particular, channels $O_A$ are the channels where exhaust flows out of the wall-flow filter wherby channels $O_E$ denote those channels where the exhaust flows into the wall-flow filter.

Figure 2 shows the normalized back-pressure of the hydrophobized parts from example 1 and 2 with respect to their reference.

Figure 3 shows the Light Off Test results at the engine test bench after full useful life (FUL) aging. In this test the temperature where the catalyst reaches 50% conversion of hydrocarbons (HC), carbon monoxide (CO) or nitrogen oxides (NOx) is monitored. Example 1 and Example 2 catalysts were aged in two separate aging runs.

Figure 4 shows the OSC Test results at the engine test bench after full useful life (FUL) aging. In this test the oxygen storage capacity is monitored. Example 1 and Example 2 catalysts were aged in two separate aging runs.

Examples:

Example 1

A high-porous 4,66x6,00 300/8 wall-flow filter was contacted at the second end (II) of the wall-flow filter with a paraffin oil dispersion in water to achieve a zone W with a length of 5% from the second end (II). Afterwards, the filter was dried at 120°C. Then an on-wall coating Z of 75% was achieved by applying an aqueous coating slurry until a washcoat loading of 67 g/L regarding the volume of the full part was achieved. The filter was dried and calcined and has a PGM loading of 15 g/ft³ total with 10 g/ft³ palladium and 5 g/ft³ rhodium.

With the same WC, a reference without hydrophobized zone W and 20% free wall from the first end (I) has been made, having also 67 g/L washcoat load and a PGM loading of 15 g/ft³ total with 10 g/ft³ palladium and 5 g/ft³ rhodium.

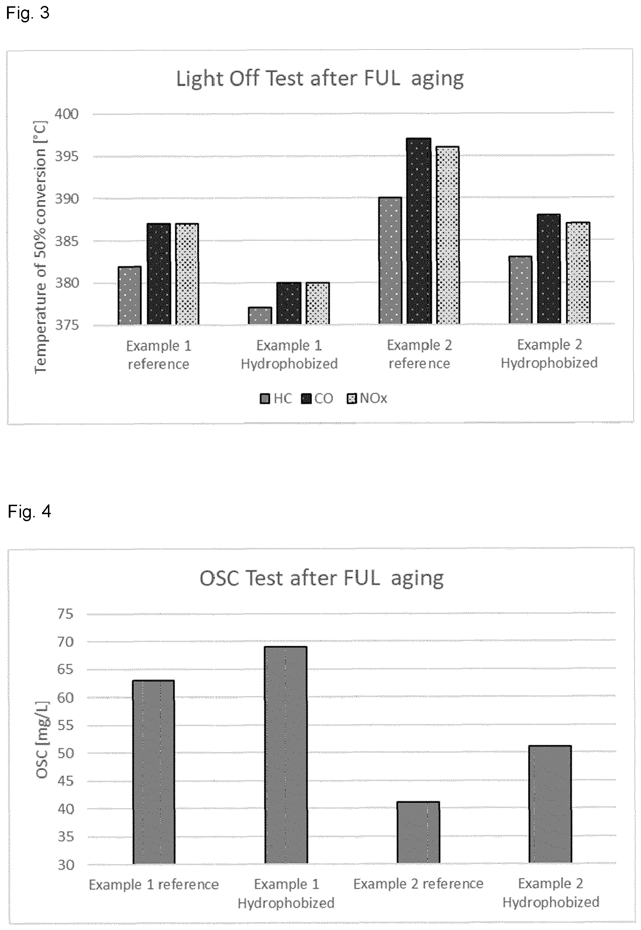

The two parts were evaluated regarding their fresh backpressure (Fig. 2) and their TWC performance (Fig. 3/4) after full useful life aging. The particulate filters were aged together in an engine test bench aging process. The aging process consists of an overrun cut-off aging process with an exhaust gas temperature of 950°C before the catalyst input (maximum bed temperature of 1030°C). The aging time was 19 hours (see Motortechnische Zeitschrift, 1994, 55, 214-218). The catalytically active particulate filters were then tested in the aged state at an engine test bench in the so-called "light-off test" and in the "OSC test". In the light-off test, the light-off behavior is determined in the case of a stoichiometric exhaust gas composition with a constant average air ratio λ (λ=0.999 with ±3.4% amplitude). In the OSC test, the oxygen storage capacity of a catalytic converter positioned between two lambda sensors can be calculated by means of the time delay of the two sensor signals occurring at air/fuel ratio leaps (Autoabgaskalalysatoren, Grundlagen-Herstellung-Entwicklung-Recycling-Ökologie, Christian Hagelüken, 2nd edition, 2005, p 62).

Example 2

A high-porous 4,66x6,00 300/8 wall-flow filter was contacted at the second end (II) of the wall-flow filter with a paraffin oil dispersion in water to achieve a zone W with a length of 5% from the second end. Afterwards, the filter was dried at 120°C. Then an on-wall coating Z of 75% was achieved by applying an aqueous coating slurry until a washcoat loading of 50 g/L regarding the volume of the full part was achieved. The filter was dried and calcined and has a PGM loading of 15 g/ft³ total with 10 g/ft³ palladium and 5 g/ft³ rhodium.

With the same WC, a reference without hydrophobized zone W and 20% free wall from the first end (I) has been made, having also 50 g/L washcoat load and a PGM loading of 15 g/ft³ total with 10 g/ft³ palladium and 5 g/ft³ rhodium.

The two parts were evaluated regarding their fresh backpressure (Fig. 2) and their TWC performance (Fig. 3/4) after full useful life aging. The particulate filters were aged together in an engine test bench aging process. The aging process consists of an overrun cut-off aging process with an exhaust gas temperature of 950°C before the catalyst input (maximum bed temperature of 1030°C ) The aging time was 19 hours (see Motortechnische Zeitschrift, 1994, 55, 214-218). The catalytically active particulate filters were then tested in the aged state at an engine test bench in the so-called "light-off test" and in the "OSC test". In the light-off test, the light-off behavior is determined in the case of a stoichiometric exhaust gas composition with a constant average air ratio $\lambda$ ($\lambda$=0.999 with $\pm$3.4% amplitude). In the OSC test, the oxygen storage capacity of a catalytic converter positioned between two lambda sensors can be calculated by means of the time delay of the two sensor signals occurring at air/fuel ratio leaps (Autoabgaskalalysatoren, Grundlagen-Herstellung-Entwicklung-Recycling-Ökologie, Christian Hagelüken, 2nd edition, 2005, p 62).

**Claims**

1. Wall-flow filter for removing particles from the exhaust gas of an internal combustion engine, which comprises a wall-flow filter substrate of length L and catalytic coating Z,

> wherein the wall-flow filter substrate has channels E and A extending in parallel between a first end (I) and a second end (II) of the wall-flow filter substrate, which are separated by porous walls and form surfaces $O_E$ and $O_A$, and wherein the channels E are closed at the second end (II) and the channels A are closed at the first end (I), and
> wherein the wall-flow filter has a zone W that is substantially free of any washcoat and extends from the second end (II) of the wall-flow filter over at most 20% of the coatable length L of the wall-flow filter on the surfaces $O_A$, and coating Z is located in the channels A on the surfaces $O_A$ and extends from the end of zone W over at least 35% of the coatable length L of the wall-flow filter and comprises at least one PGM supported by one or more carrier materials and one or more oxygen storage components.

2. Wall-flow filter according to claim 1, wherein the one or more carrier materials in coating Z are present in an amount of 20 to 50% by weight based on the total weight of the coating.

3. Wall-flow filter according to claim 1 or 2, wherein the one or more oxygen storage components in coating Z are present in a total amount of 50 to 80% by weight based on the total weight of the coating Z.

4. Wall-flow filter according to one of claims 1 - 3, wherein the coating Z contain a first cerium/zirconium/rare earth metal mixed oxide as oxygen storage component.

5. Wall-flow filter according to claim 4, wherein the first cerium/zirconium/rare earth metal mixed oxides contain lanthanum oxide, yttrium oxide, praseodymium oxide, neodymium oxide and/or samarium oxide as rare earth metal oxide.

6. Wall-flow filter according to one of claims 1 - 5, wherein coating Z comprise lanthanum-stabilized aluminum oxide, platinum, palladium, rhodium or palladium and rhodium or platinum and rhodium or platinum, palladium and rhodium and at least one oxygen storage component comprising zirconium oxide, cerium oxide, lanthanum oxide, and yttrium oxide and/or praseodymium oxide and/or neodymium oxide.

7. Wall-flow filter according to claim 6, wherein Z comprises an additional second oxygen storage component different from the first oxygen storage component which contains zirconium oxide, cerium oxide, lanthanum oxide, and praseodymium oxide and/or yttrium oxide and/or neodymium oxide.

8. Wall-flow filter according to one of claims 1 - 6, wherein the ratio of the thickness of the coating Z 5 mm away from each end in coating Z is between 1.3 - 0.7.

9. Process for the production of a wall-flow filter according to any of claims 1 - 8, comprising the steps of:

> i) contacting the second end (II) of the wall-flow filter into a hydrophobizing agent to establish a hydrophobized zone W;
> ii) optionally drying the wall-flow filter;
> iii) coating the second end (II) of the wall-flow filter with an aqueous coating slurry comprising at least one PGM supported by aluminum oxide and one or more oxygen storage components to establish coating Z;
> iv) drying and calcining the coated wall-flow filter.

10. Process according to claim 9, wherein step iii) requires to position the wall-flow filter vertically having the second end (II) at the top, supplying the coating slurry onto the second end (II) and sucking and/or pressing the coating slurry into the wall-flow filter.

11. Use of a wall-flow filter of one of claims 1 - 8 for mitigation of noxious pollutants of combustion engines.

12. Use according to claim 11, wherein the combustion engine is a gasoline engine.

13. Use according to claim 11 or 12, wherein the exhaust gases enter the wall-flow filter through the first end (I) and leave the wall-flow filter through the second end (II).

14. Use according to claim 13, wherein the exhaust gas is routed over a first TWC before it enters the wall-flow filter and afterwards over a second TWC.

Fig. 1

Fig. 2

Fig. 3

Light Off Test after FUL aging

Fig. 4

OSC Test after FUL aging

Europäisches
Patentamt

European
Patent Office

Office européen
des brevets

# EUROPEAN SEARCH REPORT

Application Number

EP 23 15 8937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/247400 A1 (TOKUDA SHINGO [JP] ET AL) 30 September 2010 (2010-09-30) | 1,8-11 | INV.<br>B01D53/94 |
| Y | * paragraphs [0013], [0030], [0032], [0033], [0035] - [0046], [0052], [0061]; figures 2, 8 * | 2,3,6,7,12,14 | |
| X | US 2006/008396 A1 (WURSTHORN STEPHAN [DE] ET AL) 12 January 2006 (2006-01-12)<br>* paragraph [0017]; figure 1 * | 1,11,13 | |
| X | US 2017/284247 A1 (KADOYA SATOSHI [JP] ET AL) 5 October 2017 (2017-10-05)<br>* paragraphs [0045] - [0047], [0082] - [0087]; tables 1-4 * | 1,8,11,13 | |
| X | US 2012/058019 A1 (MIZUTANI TAKASHI [JP] ET AL) 8 March 2012 (2012-03-08) | 1,4,5,8,11 | |
| A | * paragraphs [0050] - [0059]; figures 1, 4, 5; table 1 * | 2,3,6,7,13 | |
| Y | WO 2019/121372 A1 (UMICORE AG & CO KG [DE]) 27 June 2019 (2019-06-27)<br>* page 1, lines 3-10; claims 1, 10-15; figure 1; example 1 * | 2,3,6,7,12 | TECHNICAL FIELDS SEARCHED (IPC)<br><br>B01D<br>F01N |
| Y,D | EP 2 042 225 A1 (UMICORE AG & CO KG [DE]) 1 April 2009 (2009-04-01)<br>* paragraphs [0034] - [0036]; claim 27 * | 14 | |
| A | WO 2022/264935 A1 (CATALER CORP [JP]) 22 December 2022 (2022-12-22)<br>* paragraphs [0034] - [0038], [0041], [0042]; figures 3, 4 * | 1-14 | |

The present search report has been drawn up for all claims

| Place of search | Date of completion of the search | Examiner |
|---|---|---|
| The Hague | 29 September 2023 | Focante, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8937

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2023

| Patent document cited in search report | Publication date | Patent family member(s) | | Publication date |
|---|---|---|---|---|
| US 2010247400 A1 | 30-09-2010 | EP | 2239036 A1 | 13-10-2010 |
| | | JP | 5456353 B2 | 26-03-2014 |
| | | JP | 2010234317 A | 21-10-2010 |
| | | PL | 2239036 T3 | 30-11-2012 |
| | | US | 2010247400 A1 | 30-09-2010 |
| US 2006008396 A1 | 12-01-2006 | CN | 1688799 A | 26-10-2005 |
| | | DE | 10247946 A1 | 29-04-2004 |
| | | EP | 1554473 A1 | 20-07-2005 |
| | | JP | 2006502842 A | 26-01-2006 |
| | | KR | 20050059260 A | 17-06-2005 |
| | | US | 2006008396 A1 | 12-01-2006 |
| | | WO | 2004036003 A1 | 29-04-2004 |
| US 2017284247 A1 | 05-10-2017 | BR | 112018069967 A2 | 29-01-2019 |
| | | CN | 109475815 A | 15-03-2019 |
| | | DE | 102017106374 A1 | 05-10-2017 |
| | | EP | 3436182 A1 | 06-02-2019 |
| | | GB | 2551608 A | 27-12-2017 |
| | | JP | 2019516541 A | 20-06-2019 |
| | | KR | 20180132743 A | 12-12-2018 |
| | | RU | 2018138395 A | 14-05-2020 |
| | | US | 2017284247 A1 | 05-10-2017 |
| | | US | 2019211723 A1 | 11-07-2019 |
| | | WO | 2017170669 A1 | 05-10-2017 |
| US 2012058019 A1 | 08-03-2012 | EP | 2556872 A1 | 13-02-2013 |
| | | JP | 5764120 B2 | 12-08-2015 |
| | | JP | WO2011125768 A1 | 08-07-2013 |
| | | US | 2012058019 A1 | 08-03-2012 |
| | | WO | 2011125768 A1 | 13-10-2011 |
| WO 2019121372 A1 | 27-06-2019 | CN | 111491714 A | 04-08-2020 |
| | | CN | 111491715 A | 04-08-2020 |
| | | CN | 111511457 A | 07-08-2020 |
| | | CN | 111511469 A | 07-08-2020 |
| | | CN | 115990408 A | 21-04-2023 |
| | | EP | 3501648 A1 | 26-06-2019 |
| | | EP | 3727653 A1 | 28-10-2020 |
| | | EP | 3727654 A1 | 28-10-2020 |
| | | EP | 3727655 A1 | 28-10-2020 |
| | | US | 2020306693 A1 | 01-10-2020 |
| | | US | 2021069678 A1 | 11-03-2021 |
| | | US | 2021079822 A1 | 18-03-2021 |
| | | US | 2021086135 A1 | 25-03-2021 |
| | | US | 2023285899 A1 | 14-09-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 15 8937

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2023

| Patent document cited in search report | | Publication date | Patent family member(s) | | Publication date |
|---|---|---|---|---|---|
| | | | WO 2019121372 A1 | | 27-06-2019 |
| | | | WO 2019121375 A1 | | 27-06-2019 |
| | | | WO 2019121994 A1 | | 27-06-2019 |
| | | | WO 2019121995 A1 | | 27-06-2019 |
| EP 2042225 | A1 | 01-04-2009 | AT 457813 T | | 15-03-2010 |
| | | | EP 2042225 A1 | | 01-04-2009 |
| | | | JP 5460597 B2 | | 02-04-2014 |
| | | | JP 2010540217 A | | 24-12-2010 |
| | | | US 2010275579 A1 | | 04-11-2010 |
| | | | WO 2009043390 A2 | | 09-04-2009 |
| WO 2022264935 | A1 | 22-12-2022 | JP 7271610 B2 | | 11-05-2023 |
| | | | JP 2023000002 A | | 04-01-2023 |
| | | | WO 2022264935 A1 | | 22-12-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- EP 1657410 A2
- EP 2042226 A2
- DE 102011050788 A1
- WO 2005016497 A1
- JP H01151706 B
- EP 1789190 B1
- WO 2011098450 A1
- DE 202022000455 U1
- EP 2533901 A1
- EP 1181970 B1
- EP 1541220 B1
- WO 2008113445 A1
- WO 2008000449 A2
- WO 2019121995 A1
- WO 2019121994 A1
- EP 1911506 A1
- US 6605264 BB
- US 6468941 B
- WO 05113126 A1
- US 6387338 B
- US 7041622 BB
- EP 2042225 A1
- WO 2010097146 A1
- WO 2015143191 A1

**Non-patent literature cited in the description**

- **R. HECK et al.** Catalytic Air Pollution Control. *Commercial Technology,* 1995, 90
- **CHRISTIAN HAGELÜKEN.** Grundlagen-Herstellung-Entwicklung-Recycling-Okologie. 2005, 62
- *Motortechnische Zeitschrift,* 1994, vol. 55, 214-218
- **CHRISTIAN HAGELÜKEN.** Grundlagen-Herstellung-Entwicklung-Recycling-Ökologie. 2005, 62